# EUROPEAN PATENT APPLICATION

(11) **EP 4 024 653 A1**
(43) Date of publication of application: **06.07.2022**
(21) Application number: 20877511.4
(22) Date of filing: 14.10.2020
(51) Int. Cl.: H02J 7/00

(54) **CHARGING CONTROL METHOD AND DEVICE, AND READABLE STORAGE MEDIUM**

(30) Priority: 16.10.2019 CN 201910983722
(71) Applicant: GUANGDONG OPPO MOBILE TELECOMMUNICATIONS CORP., LTD., Dongguan, Guangdong 523860 (CN)
(72) Inventor: LI, Zhijie, Dongguan, Guangdong 523860 (CN)
(74) Representative: Ipside
(86) International application number: PCT/CN2020/120933
(87) International publication number: WO 2021/073538

(57) **Abstract**

A charging control method includes: determining (S102) whether a type of a power supply device is a preset type or a QC type when a connection port provided by the power supply device connected to the to-be-charged device is identified as a dedicated charging port; and, when the type of the power supply device is the QC type, obtaining (S104) QC protocol parameters stored in the device, and controlling charging of a battery cell of the device based on the QC protocol parameters. A maximum output voltage of the power supply device in the preset type is less than a maximum output voltage of the power supply device in the QC type. The method avoids the problem of unable to carry out fast charging or occurrence of dangerous situations due to conflicts between various fast charging schemes.

## Description

### CROSS REFERENCE

The present application claims priority of China Patent Application No. 201910983722.6, filed on October 16, 2019, in the title of "Charging Control Method, Device, and Computer Readable Storage Medium", the entire contents of which are hereby incorporated by reference.

### TECHNICAL FIELD

The present disclosure relates to the field of charging, and in particular to a charging control method, a device and a computer-readable storage medium.

### BACKGROUND

QC (Quick Charge) is a fast charging scheme. Unlike high-current fast charging, the QC protocol introduces a higher charging voltage in order to further increase a charging speed without changing an interface. Taking QC 2.0 as an example, the QC 2.0 supports voltage-current pairs of 5V/2A, 9V/2A and 12V/1.5A. The QC 3.0 may dynamically adjust an output voltage of an adapter from 3.6V to 20V in steps of 0.2V.

In order to allow the QC scheme to be compatible with other fast charging schemes (such as high-current charging schemes) for a to-be-charged device (such as a smart phone, a mobile terminal or a smart device), a complete charging control scheme needs to be provided, such that a plurality of fast charging schemes do not conflict with each other when the to-be-charged device is being charged.

The above information in the background section is illustrated to facilitate understanding of the present disclosure. Therefore, the above information may include information that does not constitute prior art known to an ordinary skilled person in the art.

### SUMMARY OF THE DISCLOSURE

The present disclosure provides a charging control method, a device, and a computer-readable storage medium.

Other features and advantages of the present disclosure will become apparent through the following detailed description, or will be learned in part through the practice of the present disclosure.

In a first aspect, a charging control method, applied in a to-be-charged device, is provided and includes: determining whether a type of a power supply device is a preset type or a QC type in response to a connection port provided by the power supply device connected to the to-be-charged device being identified as a dedicated charging port; and obtaining a QC protocol parameter stored in the to-be-charged device in response to the type of the power supply device being the QC type, and controlling charging of a battery unit of the to-be-charged device based on the QC protocol parameter; wherein a maximum output voltage of the power supply device in the preset type is less than a maximum output voltage of the power supply device in the QC type. A maximum output voltage of the power supply device in the preset type is less than a maximum output voltage of the power supply device in the QC type.

In a second aspect, a to-be-charged device is provided and includes: a charging interface, a battery unit, a first control module and a second control module. The first control module is connected to the charging interface, and in response to a connection port provided by a power supply device connected to the to-be-charged device being identified as a dedicated charging port, the first control module is configured to inform the second control module to identify whether the type of the power supply device is a preset type; to identify whether the type provided by the power supply device is a QC type; and to obtain a QC protocol parameter stored in the to-be-charged device in response to the type of the power supply device being identified as the QC type, and control charging of the battery unit of the to-be-charged device based on the QC protocol parameter. A maximum output voltage of the power supply device in the preset type is less than a maximum output voltage of the power supply device in the QC type.

In a third aspect, an electronic device is provided and includes: a memory, a processor and executable instructions stored in the memory and capable of being executed by the processor. The processor performs the method as described in the above.

In a fourth aspect, a computer-readable storage medium is provided and has executable instructions stored in. The executable instructions, when being executed by a processor, implement the method as described in the above.

According to the charging control method of the present disclosure, a charging control process is provided for a case where the to-be-charged device supports both the QC fast charging scheme and other fast charging schemes, in order to avoid a problem of the device unable to be charged or other dangerous situations caused by conflicts between various fast charging schemes.

It shall be understood that the above general description and the following detailed description are only exemplary and do not limit the present disclosure.

### BRIEF DESCRIPTION OF THE DRAWINGS

The above and other objects, features and advantages of the present disclosure will become more apparent by detailed description of exemplary embodiments by referring to the accompanying drawings.
FIG. 1 is a flow chart of a charging control method according to an embodiment of the present disclosure.
FIG. 2 is a flow chart of another charging control method according to an embodiment of the present disclosure.
FIG. 3 is a flow chart of still another charging control method according to an embodiment of the present disclosure.
FIG. 4 is a flow chart of still another charging control method according to an embodiment of the present disclosure.
FIG. 5 is a block diagram of a to-be-charged device according to an embodiment of the present disclosure.
FIG. 6 is a structural schematic view of a terminal device according to an embodiment of the present disclosure.
FIG. 7 is a schematic view of a computer-readable storage medium according to an embodiment of the present disclosure.

### DETAILED DESCRIPTION

The embodiments will be described more completely by referring to the accompanying drawings. However, the embodiments may be implemented in various forms and shall not be limited to the examples set forth herein. On the contrary, provision of these embodiments allows the present disclosure to be more comprehensive and complete and illustrates ideas of the embodiments to the skilled person in the art in a comprehensive manner. The accompanying drawings are only schematic illustrations of the present disclosure and are not drawn in scale. Identical reference numerals in the drawings indicate identical or similar components, and repetitive descriptions thereof will be omitted.

In addition, features, structures or properties described may be combined in any suitable manner in one or more embodiments. In the following description, various specific details are provided so as to provide a complete understanding of the embodiments of the present disclosure. However, ordinary skilled persons in the art shall understand that the technical embodiments of the present disclosure may be performed while omitting one or more of particular details, or that other methods, components, devices, operations and the like may be applied. In other cases, well-known structures, methods, devices, implementations or operations are not shown or described in detail to avoid obscuring aspects of the present disclosure due to overwhelming.

In the present disclosure, unless otherwise expressively specified and qualified, terms "connected", "connection", and the like, shall be understood in a broad sense, such as, either fixed connection, detachable connection, or being formed as one piece of structure, mechanical connection, electrical connection, or communicative connection, direct connection, indirect connection through an intermediate medium, connection within two elements or interaction between two elements. Meanings of the above terms in the context of the present disclosure shall be understood by any ordinary skilled person in the art case by case.

In addition, in the description of the present disclosure, terms "first" and "second" are used for descriptive purposes only and shall not be interpreted as indicating or implying relative importance or implicitly specifying the number of technical features. Therefore, a feature defined by "first" and "second" may explicitly or implicitly include one or more such features.

In a charging process, a power supply device (such as a power adapter, a mobile power supply (a power bank), and the like) is generally connected to a to-be-charged device via a cable. Power supplied by the power supply device is transmitted to the to-be-charged device via the cable to charge the to-be-charged device.

Before illustrating implementation of the present disclosure, a principle of the QC protocol will be briefly introduced. After the power supply device (such as a QC adapter, a QC mobile power) supporting the QC protocol is connected to the to-be-charged device, the power supply device communicates with an Application Processor (AP) in the to-be-charged device via a data line D+/D- in a USB cable to negotiate a currently suitable voltage-current pair. Taking the QC 2.0 protocol as an example, supported voltage-current pairs are shown in Table 1.

**Table 1**

| D+ | D- | A maximum output voltage of the QC power supply device |
|---|---|---|
| 3.3V | 3.3V | 20V |
| 0.6V | 0.6V | 12V |
| 3.3V | 0.6V | 9V |
| 0.6V | 0V | 5V |

A QC adaptor and a to-be-charged device supporting a QC protocol of 9V/2A may be taken as an example. Firstly, in response to the QC adapter being inserted into a charging port of the to-be-charged device, an AP in the to-be-charged device takes a BC1.2 protocol to identify whether a connection port provided by the QC adapter is a dedicated charging port (DCP). In response to the connection port provided by the QC adapter being identified as the DCP, the data cable D+/D- is shorted, and the QC adapter outputs a 5V/2A voltage-current pair to provide a normal charging scheme for the to-be-charged device (compared to the fast charging scheme, a charging speed provided by the adapter is slower in the normal charging scheme, and it takes longer to fully charge a battery having a same power capacity).

Since the AP of the to-be-charged device supports the QC protocol, a service process named HVDCP may be initiated to further negotiate with the QC adapter about the voltage-current pair applicable for fast charging. The HVDCP process allows a voltage of 0.325V to be loaded on the data line D+, and the voltage remains for 1.25 seconds. In response to the QC adapter detecting that a voltage exceeding 0.325V is loading on the data line D+ for more than 1.25 seconds, the short of the data line D+/D- is disconnected. In this case, the voltage on the data line D- does not change as the voltage on the data line D+ changes, but decreases directly. In response to the AP of the to-be-charged device detecting that the voltage on the data line D- decreasing from 0.325V, the AP determines that the power supply device is the QC adapter and may start requesting a desired voltage from the QC adapter, such as requesting a voltage of 9V In this case, the AP may request the voltage of 9V by setting 3.3V and 0.6V for the data lines D+ and D- respectively. When a current voltage needs to be decreased to 5V, the AP may set 0.6V and 0V for the data lines D+ and D- respectively. After the QC adapter detects corresponding voltages on the data lines D+ and D-, and the QC adapter may output corresponding voltages.

To be noted that, since to-be-charged devices in various models may be configured with various hardware, not all voltage-current pairs in Table 1 can be completely supported. For example, some to-be-charged devices may only be charged in the normal charging scheme via a 5V/2A voltage-current pair even though the devices identify the QC adapter, whereas some to-be-charged devices may only support the 5V/2A voltage-current pair, a 9V/2A voltage-current pair, and the like. Charging parameters of specific QC protocols supported by the to-be-charged device may be obtained in preset files.

In the art, in addition to the QC schemes described above, high-current charging schemes may be present. In a high-current fast charging scheme, the power supply device may output a relatively high current (typically greater than 2.5A, such as 4.5A, 5A or even higher). The power supply device may be a fast charging adapter in a first type, such as having a maximum output power of 50W (10V/5A), and charges the to-be-charged device in the fast charging scheme. Alternatively, the power supply device may be a fast charging adapter in a second type, such as having a maximum output power of 20W (5V/4A), and charges the to-be-charged device in the fast charging scheme.

As described in the above, in order to allow various fast charging schemes to be compatible in the to-be-charged device, a charging control method needs to be provided to avoid conflicts between the various fast charging schemes. The charging control method provided by the implementation of the present disclosure will be illustrated below.

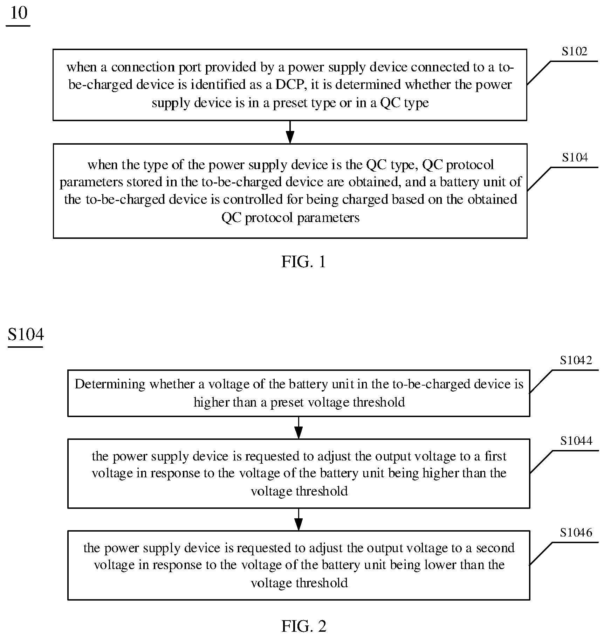

FIG. 1 is a flow chart of a charging control method according to an embodiment of the present disclosure. The charging control method may be applied in the to-be-charged device.

The to-be-charged device may, for example, be a terminal or a communication terminal. The terminal or communication terminal includes, but is not limited to, a terminal provided with a connection via a wired line, such as via a public switched telephone network (PSTN), a digital subscriber line (DSL), a digital cable, a direct cable connection, and/or another data connection/network, such as, a cellular network, a wireless local area network (WLAN), a digital video broadcasting handheld, satellite networks, amplitude modulation-frequency modulation (AM-FM) broadcast transmitters, and/or a wireless interface of another communication terminal to receive/send communication signals. A communication terminal set to communicate via a wireless interface may be referred to as a "wireless communication terminal", a "wireless terminal" and/or a "mobile terminal".

Examples of mobile terminals include, but are not limited to, satellite or cellular phones; personal communication system (PCS) terminals that may combine cellular radio telephones with data processing, fax, and data communication capabilities; personal digital assistants (PDAs) that may include radio telephones, pagers, Internet/Intranet access, Web browsers, notepads, calendars and/or a global positioning system (GPS) receiver; and a conventional lap top and/or handheld receiver or other electronic devices including a radio telephone transceiver. In addition, the terminal may include, but is not limited to, rechargeable electronic devices such as e-book readers, smart wearable devices, mobile power sources (e.g. rechargeable batteries, travel chargers), e-cigarettes, wireless mice, wireless keyboards, wireless headphones, Bluetooth speakers, and other rechargeable electronic devices with charging capabilities.

As shown in FIG. 1, the charging control method 10 includes following operations.

In an operation S102, when a connection port provided by a power supply device connected to a to-be-charged device is identified as a DCP, it is determined whether the power supply device is in a preset type or in a QC type.

As described in the above, for example, the AP of the to-be-charged device identifies whether the connection port provided by the power supply device is the DCP via the BC1.2 protocol.

In some embodiments, the AP may inform a control module of the to-be-charged device to identify whether the power supply device is in the preset type when the connection port provided by the power supply device connected to the to-be-charged device is identified as the DCP.

After the AP identifies the DCP, the AP communicates with the control module of the to-be-charged device to inform the control module of the to-be-charged device to further identify whether the power supply device is in the preset type. The control module may be implemented as a separated Micro Control Unit (MCU) for controlling the high-current fast charging process as described above. The preset type can for example be the fast charging adapter in the first type in the high-current charging scheme described above or a fast charging adapter in a second type.

That is, after the DCP is identified, the AP delays to initiate the HVDCP server process. The AP firstly communicates with the control module to instruct the control module to firstly identify whether the power supply device is in the preset type.

Since the control module may need to take the data lines D+/D- in the USB cable to identify the power supply device in the preset type, the delayed initiation of the HVDCP server process may avoid the problem of incorrect type identification caused by the two fast charging schemes taking the lines D+/D- for identification at the same time. In response to a type identification error occurring, the fast charging may be unable to be performed, and a dangerous situation caused by inappropriate charging voltages/currents may occur. Further, the AP determines whether the type of the power supply device identified by the control module is the preset type.

After the control module identifies that the fast charging adapter is in the first type or the second type, the control module communicates with the AP to inform the AP the type of power supply device, and the control module controls the charging process that the fast charging adapter in the first type or the second type charges the to-be-charged device. In response to the control module failing to identify the fast charging adapter in the first type or the second type, the control module may also communicate with the AP to inform the AP that the power supply device in the preset type is not identified.

That is, in some embodiments, the AP may determine whether the type of the power supply device identified by the control module is the preset type based on the type informed by the control module.

In response to the control module failing to identify the fast charging adapter in the first type or the second type, the AP is not informed. Alternatively, some errors may occur, resulting in the AP not receiving feedback from the control module. In order to avoid the AP from waiting for the feedback, in some embodiments, the AP may set a preset time duration. The AP may determine that the type of the power supply device identified by the control module is not the preset type when the AP does not receive any type information from the control module within the preset time duration. Typically, the time consumed by the control module to identify the type of the power supply device may not be longer than 30 seconds. Therefore, the AP may set the preset time duration as 30 seconds, but the present disclosure does not limit to the preset time duration.

The AP identifies whether the type of the power supply device is the QC type when the AP determines that the type of the power supply device identified by the control module is not the preset type.

When it is determined that the power supply device is not in the preset type, the AP may determine whether the type of the power supply device is the QC type by initiating the HVDCP service process as described above. A specific identified type is described above. The HVDCP process allows the voltage of 0.325V to be loaded on the data line D+ for 1.25 seconds. When the QC adapter detects that the voltage of 0.325V is loaded on the data line D+ for more than 1.25 seconds, the short of the data lines D+/D- may be disconnected. In this case, the voltage on the data line D- does not change as the voltage on the data line D+ changes, but decreases directly. When the AP of the to-be-charged device detects that the voltage on the data line D- decreases from 0.325V, the power supply device is determined as being in the QC type, and the AP may start requesting the desired voltage from the QC adapter, such as requesting a voltage of 9V In this case, the AP requests 9V by setting 3.3V and 0.6V on the data lines D+ and D-respectively. When the current voltage needs to be decreased to 5V, the AP may set 0.6V and 0V on the data lines D+ and D- respectively. The QC adapter may output corresponding voltages when the QC adapter detects corresponding voltages on the data lines D+ and D-.

Alternatively, in some embodiments, the AP may initiate the HVDCP service process first after identifying the DCP to perform the QC type identification as described above.

In an operation S104, when the type of the power supply device is the QC type, QC protocol parameters stored in the to-be-charged device are obtained, and a battery unit of the to-be-charged device is controlled for being charged based on the obtained QC protocol parameters.

As described above, the to-be-charged device supporting the QC protocol stores relevant parameters, such as a specific supported voltage-current pair, and the like, of the QC protocol in a preset file.

After obtaining the QC protocol parameters, the AP communicates with the QC adapter to control the voltage/current provided by the QC adapter to further control communication with the to-be-charged device.

According to the charging control method provided by implementation of the present disclosure, a charging control process is provided for the case where the to-be-charged device support both the QC fast charging scheme and other fast charging schemes, avoiding a problem of the device unable to be charged or other dangerous situations caused by conflicts between various fast charging schemes.

It shall be understood that, the present disclosure describes how particular examples are formed and performed, but principles of the present disclosure are not limited to any detail of these examples. On the contrary, the principles can be applied to many other embodiments based on the present disclosure.

FIG. 2 is a flow chart of another charging control method according to an embodiment of the present disclosure. Unlike the charging control method 10 shown in FIG. 1, the charging control method shown in FIG. 2 further illustrates how to control the battery unit of the to-be-charged device to charge based on the QC protocol. That is, the charging control method shown in FIG. 2 provides a detailed embodiment of the operation S104.

As shown in FIG. 2, the operation S104 includes following operations.

In an operation S1042, it is determined whether a voltage of the battery unit in the to-be-charged device is higher than a preset voltage threshold.

In the fast charging process, when the battery unit is almost fully charged, a problem of the battery unit unable to be fully charged due to a falsely high voltage of the battery unit may occur. To avoid the problem, embodiments of the present disclosure further provides a voltage fallback mechanism. A current voltage of the battery unit is compared to the preset voltage threshold to determine whether the high voltage (such as 9V, 12V, and the like) currently applied for fast charging needs to be adjusted back to a low voltage (such as 5V) to continue charging.

In an operation S1044, the power supply device is requested to adjust the output voltage to a first voltage in response to the voltage of the battery unit being higher than the voltage threshold.

The voltage of the battery unit being higher than the voltage threshold may indicate that the current voltage of the battery device is falsely high. In this case, communication with the QC adapter may be performed to request the QC adapter to adjust the output voltage (such as adjusting the voltage on the data lines D+ and D- as described above), such as, to request the QC adapter to adjust the output voltage to be the first voltage.

The first voltage may be, for example, 5V voltage as described above.

In an operation S1046, the power supply device is requested to adjust the output voltage to a second voltage in response to the voltage of the battery unit being lower than the voltage threshold.

In response to the voltage of the battery unit being lower than the voltage threshold, the AP may communicate with the QC adapter to request the QC adapter to adjust the output voltage to the second voltage higher than the first voltage.

The first voltage is lower than the second voltage, and the second voltage may be, for example, 9V, 12V, and the like, as mentioned above.

As described above, according to the charging control method provided in the embodiments of the present disclosure, the charging voltage fallback mechanism is provided, such that the problem of the battery unit being not fully charged due to the falsely high battery voltage in the QC process may be avoided.

To be noted that, the above drawings are only schematic illustration of processes included in the method according to exemplary embodiments of the present disclosure and shall not be interpreted as a limitation. That is, it does not require or imply that operations must be performed in the particular order, or that all the operations shown must be performed to achieve the desired result. Additionally or alternatively, certain operations may be omitted, a plurality of operations may be combined into a single step for execution, and/or one operation may be broken down into a plurality of operations for execution. Alternatively, the processes may be executed synchronously or asynchronously in various modules.

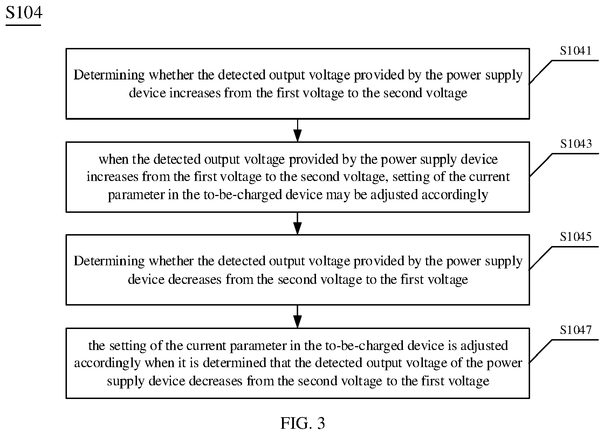

FIG. 3 is a flow chart of still another charging control method according to an embodiment of the present disclosure. Compared to the charging control method 10 shown in FIG. 1, the charging control method shown in FIG. 3 further illustrates how to control the battery unit of the to-be-charged device to be charged based on the QC protocol. That is, the charging control method shown in FIG. 3 further provides another detailed embodiment of the operation S104.

As shown in FIG. 3, the operation S104 includes following operations.

In an operation S1041, it is determined whether the detected output voltage provided by the power supply device increases from the first voltage to the second voltage.

As described above, when the AP first identifies, via the BC1.2 protocol, the type of the connection port provided by the power supply device to be the DCP, the normal charging mode may be applied firstly to charge the battery unit in the to-be-charged device. At the same time, a corresponding thread may be initiated to set some current parameters to achieve an adaptive operation in the charging process. The adaptive operation may be, for example, an operation adapted based on a current battery temperature, and that is, the current parameter may be set to various values based on various battery temperatures.

For example, the AP may communicate with a module configured for voltage detection in the to-be-charged device to determine whether the output voltage is changed.

In the operation S1043, when the detected output voltage provided by the power supply device increases from the first voltage to the second voltage, setting of the current parameter in the to-be-charged device may be adjusted accordingly.

For example, the AP may initiate a dedicated thread to achieve the above operation. In order to not affect power consumption of the to-be-charged device, the thread may be carried out periodically, such as performing the detection every 50 milliseconds.

When an increase in the output voltage is detected, the AP needs to adjust the above current parameter setting accordingly to adapt to the change in the output voltage, such as an increase from 5V in the normal charging mode to 9V in the fast charging mode as described above.

In addition, the thread usually needs to run on a first detection only. Once the fast charging mode is initiated and a stable voltage is reached, the thread does not need to perform the detection any more. Therefore, the execution of the thread may be suspended to avoid power consumption of the to-be-charged device.

A charging parameter may include at least one of: an input current parameter for limiting a maximum output current of the power supply device, a charging current parameter for limiting a maximum current input to the battery unit, a cut-off current parameter for determining whether the battery unit is fully charged, and the like.

In addition, in some embodiments, the operation S104 may further include following operations.

In an operation S1045, it is determined whether the detected output voltage provided by the power supply device decreases from the second voltage to the first voltage.

A change in the output voltage also needs to be detected when the output voltage decreases (as described above, the output voltage fallback mechanism provided to avoid the falsely high battery voltage).

For example, the AP may set up a dedicated thread to perform the detection. The thread may be performed periodically in order to save the power consumption of the to-be-charged device.

In the operation S1047, the setting of the current parameter in the to-be-charged device is adjusted accordingly when it is determined that the detected output voltage of the power supply device decreases from the second voltage to the first voltage.

The AP needs to adjust the setting of the current parameter accordingly when the decrease of the output voltage is detected, in order to avoid the problem that the adaptive parameter is applied incorrectly when the output voltage is changed.

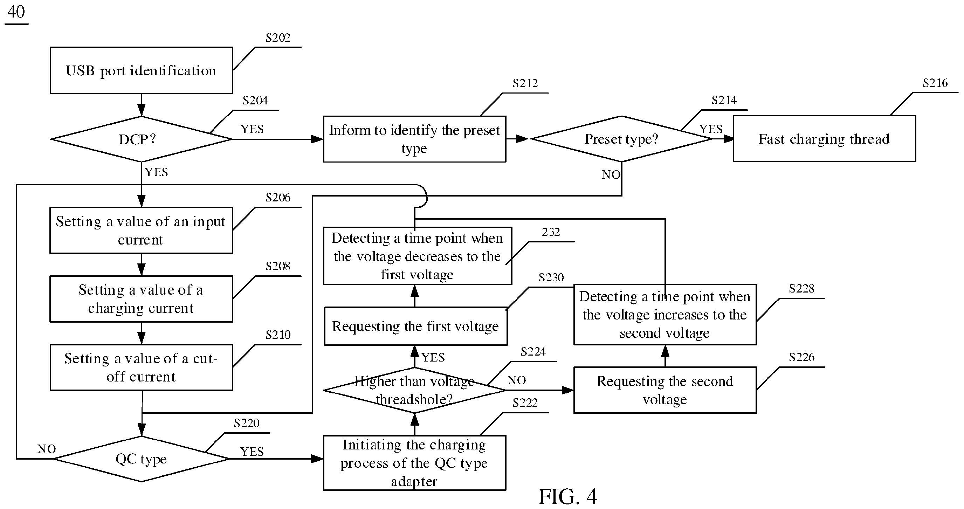

FIG. 4 is a flow chart of still another charging control method according to an embodiment of the present disclosure. The charging control method shown in FIG. 4 may be applied in the to-be-charged device.

As shown in FIG. 4, when the AP detects that the power supply device is plugged in, the AP performs USB port identification via the BC1.2 protocol (an operation S202). The AP determines whether the identified port is the DCP (an operation S204). In response to the identified port being the DCP, the AP may perform an operation S212 to inform the control module to identify whether the type of the power supply device is the preset type. Further, in response to the identified port being the DCP, the AP may perform an operation S206 to set the input current value in the normal charging mode. The input current value is configured to limit a maximum output current of the power supply device. Further, the AP may set the charging current value in the normal charging mode, which is configured to limit a maximum charging current loaded to the battery unit (an operation S208). The input current value and the charging current value cooperatively determine the charging process, and the charging current loaded to the battery unit must not exceed a minimum of the two values. Subsequently, the cut-off current value may set (an operation S210), which is configured to determine whether the battery unit is fully charged. When the voltage of the battery unit is higher than a voltage threshold for determining fully charging, and at the same time, the current entering the battery unit is less than the cut-off current value for a predetermined period of time, the AP determines that the battery unit is fully charged.

After the AP informs the control module in the operation S212 to identify the preset type, the AP determines whether the type of the power supply device identified by the control module is the preset type (an operation S214). When the type of the power supply device identified by the control module is the preset type, the AP initiates a preset type fast charging thread and maintains communication with the control module, and the control module controls the charging process of the battery unit (an operation S216). When the type of the power supply device identified by the control module is not the preset type, the AP initiates the HVDCP service process to identify the adapter in the QC type and performs an operation S220 to determine whether the type of the power supply device is the QC type. When the type of the power supply device is not the QC type, the operation S206 is performed where the input current value, the charging current value, the cut-off current value mentioned above may be adaptively reset based on the detected temperature of the battery unit. When the type of the power supply device is the QC type, an operation S222 is performed to initiate the charging process for the adapter in the QC type. Subsequently, it is determined whether the voltage of the battery unit is higher than the preset voltage threshold (an operation S224). When the voltage of the battery unit is not higher than the preset voltage threshold, an operation S226 is performed to request the power supply device to adjust the output voltage to the second voltage. A preset thread is initiated (an operation S228) to detect a time point when the output voltage (such as 5V) in the normal charging mode increases to reach the second voltage (such as 9V). After the time point is detected, the operation S206 is performed, values of the various adaptive current parameters may be adjusted. When it is determined that the voltage of the battery unit is higher than the preset voltage threshold, the operation S230 performed to request the power supply device to adjust the output voltage to the first voltage. As described above, the operation is the output voltage fallback mechanism set up to avoid the battery unit from being unable to be fully charged due to the falsely high battery voltage. Further, the AP may initiate another dedicated thread for detecting a time point when the output voltage falls back from a current output voltage (such as 9V) to the first voltage (such as 5V) (an operation S232). The operation S206 may be performed after when the time point is detected.

To be noted that, the operation S220 needs to be performed only once, that is, the operation of identifying whether the adapter is in the QC type needs to be performed only once.

The following is an example of a device embodiment of the present disclosure that may perform the method in the embodiments of the present disclosure. Details not disclosed in the device embodiments may refer to the method embodiments of the present disclosure.

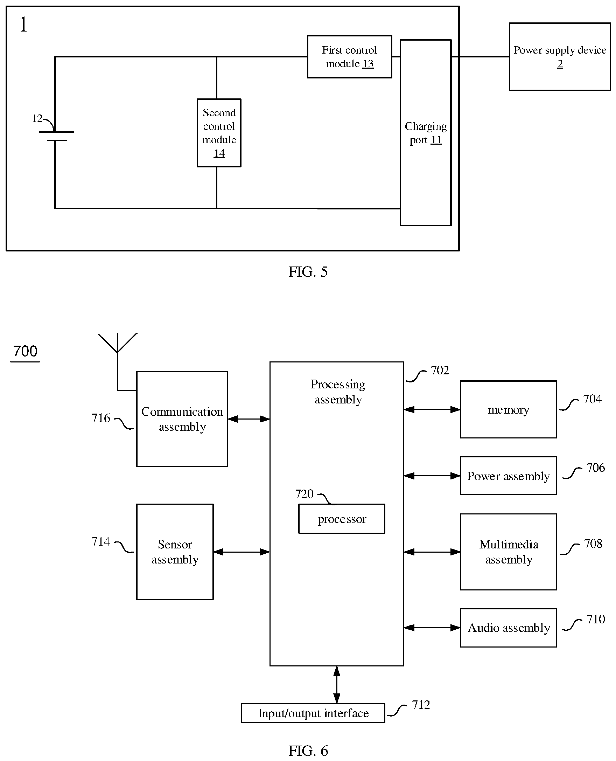

FIG. 5 is a block diagram of a to-be-charged device according to an embodiment of the present disclosure.

As shown in FIG. 5, the to-be-charged device 1 includes: a charging interface 11, a battery unit 12, a first control module 13 and a second charging module 14.

In particular, the to-be-charged device 1 is connected to a power supply device 2 via the charging interface 11 to charge the battery unit 12.

The charging interface 11 may be, for example, a USB 2.0 interface, a micro USB interface or a USB TYPE-C interface. In some embodiments, the charging interface 11 may also be a lightning interface or any other type of parallel port or serial port capable of being configured for charging.

The battery unit 12 may include a single lithium battery containing a single cell or multiple cells; or include two battery units connected in series with each other, each of the two battery units is a lithium battery containing a single cell or multiple cells.

The battery unit containing a single battery cell may be taken as an example. For the to-be-charged device including the single battery cell, when a high charging current is applied to charge the single battery unit, the to-be-charged device may be heated severely. In order to ensure a charging speed of the to-be-charged device and to alleviate heating of the to-be-charged device in the charging process, a structure of the battery unit may be modified. A plurality of battery units may be connected in series with each other, and the plurality of battery units may be charged directly. That is, the voltage output from the adapter may be directly loaded onto two ends of the plurality of battery units.

Compared to the single battery unit (that is, considering a capacity of the single battery unit before improvement to be the same as a total capacity of the plurality of battery units connected in series after the improvement), a charging current required for the plurality of battery units is approximately 1/N of a charging current required for the single battery unit in order to achieve a same charging speed (N is the number of battery units connected in series). That is, in order to achieve the same charging speed, the plurality of battery units connected in series allows the charging current to be reduced significantly, further reducing the heat generated by the to-be-charged device in the charging process. Therefore, in order to increase the charging speed and reduce the heat generated by the to-be-charged device in the charging process, the to-be-charged device may be configured with the plurality of battery units connected in series.

The first control module 13 is connected to the charging interface 11 and is configured to inform the second control module 14 to identify whether the type of the power supply device 1 is the preset type when the first control module 13 identifies whether the connection port provided by the power supply device 2 connected to the to-be-charged device 1 is the DCP. The first control module 13 is configured to identify whether the type of the power supply device 2 is the QC type. The first control module 13 is configured to obtain QC protocol parameters stored in the to-be-charged device 1 when the first control module 13 identifies that the type of the power supply device 2 is the QC type, and to control the charging of the battery unit 12 of the to-be-charged device 1 based on the QC protocol parameters. In some embodiments, the first control module 13, when controlling the charging of the battery unit 12 of the to-be-charged device 1, is configured to: determine whether the voltage of the battery unit 12 is higher than the preset voltage threshold; request the power supply device 2 to adjust the output voltage to the first voltage when the voltage of the battery unit 12 is higher than the voltage threshold; and request the power supply device 2 to adjust the output voltage to the second voltage when the voltage of the battery unit 12 is lower than the voltage threshold. The first voltage is lower than the second voltage.

In some embodiments, the first control module 13, when controlling the charging of the battery unit 12 of the to-be-charged device 1, is configured to: determine whether the detected output voltage provided by the power supply device 2 increases from the first voltage to the second voltage; and adjust setting of the current parameter in the to-be-charged device 1 accordingly when the detected output voltage provided by the power supply device 2 is determined as increasing from the first voltage to the second voltage.

In some embodiments, the first control module 13, when controlling the charging of the battery unit 12 of the to-be-charged device 1, is configured to: determine whether the detected output voltage provided by the power supply device 2 decreases from the second voltage to the first voltage; and adjust setting of the current parameter in the to-be-charged device 1 accordingly when the detected output voltage provided by the power supply device 2 is determined as decreasing from the second voltage to the first voltage.

In some embodiments, the current parameter includes at least one of: the input current parameter for limiting the maximum output current of the power supply device 2, the charging current parameter for limiting the maximum current input to the battery unit 12, and the cut-off current parameter for determining whether the battery unit 12 is fully charged.

In some embodiments, the first control module 13 is configured to determine, based on the type feedback from the second control module 14, whether the type of the power supply device 2 identified by the second control module 14 is the preset type.

In some embodiments, the first control module 13, when not receiving any type information sent from the second control module 14 within a preset period of time, is further configured to determine that the type of the power supply device 2 identified by the second control module 14 is not the preset type.

As described above, the first control module 13 may be the application processor of the to-be-charged device 1, and the second control module 14 may be a micro control unit (MCU).

According to the to-be-charged device in the embodiments of the present disclosure, in a first aspect, a charging control process is provided for the situation that the to-be-charged device supports both the QC fast charging scheme and other fast charging schemes, avoiding the problem that the fast charging unable to be carried out or occurrence of dangerous situations due to conflict between various fast charging schemes. In a second aspect, the voltage fallback mechanism is provided to avoid the problem that the battery unit is unable to be fully charged due to the falsely high battery voltage in the fast charging process. In a third aspect, the time point when the maximum input current changes is detected, such that parameters in the adaptive operation may be adjusted in time to avoid application of unsuitable parameter values in the charging process.

To be noted that, the block diagrams shown in the drawings are functional entities and do not necessarily have to correspond to physically or logically independent entities. The functional entities may be implemented in a software form, or in one or more hardware modules or integrated circuits, or in different network and/or processor devices and/or microcontroller devices.

FIG. 6 is a structural schematic view of a terminal device according to an embodiment of the present disclosure. The device 700 shown in FIG. 6 may be a specific example of the to-be-charged device 1 as described above, but shall not limit the present disclosure. The device 700 may be, for example, a mobile phone, a computer, a digital broadcasting terminal, a messaging device, a gaming console, a tablet device, a medical device, a fitness device, a personal digital assistant, and the like.

As shown in FIG. 6, the device 700 may include one or more of: a processing assembly 702, a memory 704, a power assembly 706, a multimedia assembly 708, an audio assembly 710, an input/output (I/ O) interface 712, a sensor assembly 714, and a communication assembly 716.

The processing assembly 702 typically controls an overall operation of the device 700, such as operations associated with displaying, phone calling, data communication, camera operation, and recording operations. The processing assembly 702 may include one or more processors 720 to execute instructions to complete all or some of the operations of the methods in various embodiments of the present disclosure described above. In addition, the processing assembly 702 may include one or more modules that facilitate interaction between the processing assembly 702 and other components. For example, the processing assembly 702 may include a multimedia module to facilitate interaction between the multimedia assembly 708 and the processing assembly 702.

The memory 704 is configured to store various types of data to support operations performed on the device 700. Examples of the data include instructions for any application or any method performed on the device 700, contact data, phonebook data, messages, images, videos, and the like. The memory 704 may be implemented by any type of volatile or non-volatile storage device or a combination thereof, such as a static random access memory (SRAM), an electrically erasable programmable read-only memory (EEPROM), an erasable programmable read-only memory (EPROM), programmable read-only memory (PROM), a read-only memory (ROM), a magnetic memory, a flash memory disk, a magnetic disk or an optical disk.

The power supply assembly 706 supplies power for various components of the device 700. The power supply assembly 706 may include a power management system, one or more power sources, and other assemblies associated with generating power, managing power, and distributing power for the device 700.

The multimedia assembly 708 includes a screen of an output interface between the device 700 and the user. In some embodiments, the screen may includes a liquid crystal display (LCD) and a touch panel (TP). When the screen includes the touch panel, the screen may be a touch screen to receive input signals from the user. The touch panel includes one or more touch sensors to sense touches, slidings and gestures on the touch panel. The touch sensors may sense boundaries of the touches or the sliding operations, and may further detect duration and pressures associated to the touches or the sliding operations. In some embodiments, the multimedia assembly 708 may further include a front camera and/or a rear camera. The front camera and/or rear camera may receive external multimedia data when the device 700 is in an operating mode, such as a shooting mode or a video mode. Each of the front camera and the rear camera may be a fixed optical lens system or may have a focal length and an optical zooming capability.

The audio assembly 710 is configured to output and/or input audio signals. For example, the audio assembly 710 includes a microphone (MIC) configured to receive external audio signals when the device 700 is in an operating mode, such as a calling mode, a recording mode and a voice recognition mode. The received audio signals may be further stored in the memory 704 or sent via the communication assembly 716. In some embodiments, the audio assembly 710 further includes a speaker for outputting the audio signals.

The input/output (I/O) interface 712 provides an interface between the processing assembly 702 and a peripheral interface module. The peripheral interface module may be a keypad, a click wheel, a button, and the like. The button may include, but is not limited to: a home button, a volume button, a start button and a lock button.

The sensor assembly 714 includes one or more sensors for providing status assessment of various aspects of the device 700. For example, the sensor assembly 714 may detect an activated/deactivated state of the device 700 and a relative positioning of assemblies. For example, the assembly may be a display and a keypad of the device 700, and the sensor assembly 714 may detect a change in position of the device 700 or a change in an assembly of the device 700, presence or absence of a contact between the device 700 and the user, an orientation or acceleration/deceleration of the device 700, and a change in a temperature of the device 700. The sensor assembly 714 may include a proximity sensor configured to detect presence of an adjacent object without any physical contact. The sensor assembly 714 may also include a light sensor, such as a CMOS or CCD image sensor, configured for imaging applications. In some embodiments, the sensor assembly 714 may include an acceleration sensor, a gyroscope sensor, a magnetic sensor, a pressure sensor or a temperature sensor.

The communication assembly 716 is configured to facilitate wired or wireless communication between the device 700 and other devices. The device 700 may have access to a communication standard-based wireless network, such as a WiFi network, a 2G network, a 3G network, a 4G network, a 5G network, or a combination thereof. In an embodiment, the communication assembly 716 receives broadcast signals or broadcast-related information from an external broadcast management system via a broadcast channel. In an embodiment, the communication assembly 716 further includes a near-field communication (NFC) module to facilitate short-range communication. For example, the NFC module may be implemented based on the radio frequency identification (RFID) technology, the infrared data association (IrDA) technology, the ultra-wideband (UWB) technology, the Bluetooth (BT) technology and other technologies.

In exemplary embodiments, the device 700 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors or other electronic components to perform the methods described above.

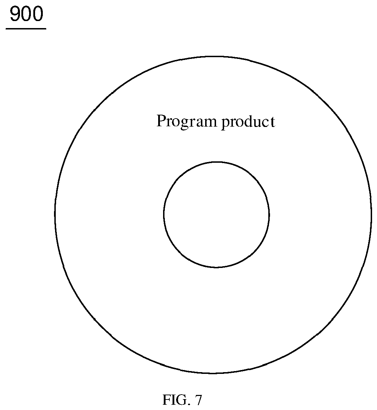

FIG. 7 is a schematic view of a computer-readable storage medium according to an embodiment of the present disclosure.

As shown in FIG. 7, the present embodiment of the present disclosure provides a program product 900 to perform the above methods. The program product 900 may employ a portable compact disk read-only memory (CD-ROM), may include program codes, and may be run on a terminal device, such as a personal computer. However, the program product of the present disclosure is not limited thereto, in the present disclosure, the computer-readable storage medium may be any tangible medium containing or storing a program that may be executed by or executed cooperatively with an instruction execution system, a device or an apparatus.

The above computer-readable medium carries one or more programs which, when being executed by one device, cause the computer-readable medium to perform the functions as shown in the FIGS. 1-4.

Exemplary embodiments of the present disclosure are specifically illustrated and described above. It shall be understood that the present disclosure is not limited to the detailed structures, arrangements or implementation methods described herein. Rather, the present disclosure is intended to cover a variety of modifications and equivalent settings within the spirit and scope of the appended claims.

## Claims

1. A charging control method, applied in a to-be-charged device, comprising:
determining whether a type of a power supply device is a preset type or a QC type in response to a connection port provided by the power supply device connected to the to-be-charged device being identified as a dedicated charging port; and
obtaining a QC protocol parameter stored in the to-be-charged device in response to the type of the power supply device being the QC type, and controlling charging of a battery unit of the to-be-charged device based on the QC protocol parameter;
wherein a maximum output voltage of the power supply device in the preset type is less than a maximum output voltage of the power supply device in the QC type.

2. The charging control method according to claim 1, wherein the controlling charging of a battery unit of the to-be-charged device based on the QC protocol parameter, comprises:
determining whether a voltage of the battery unit is higher than a preset voltage threshold;
requesting the power supply device to adjust the output voltage to a first voltage in response to the voltage of the battery unit being higher than the voltage threshold; and
requesting the power supply device to adjust the output voltage to a second voltage in response to the voltage of the battery unit being lower than the voltage threshold;
wherein the first voltage is lower than the second voltage.

3. The charging control method according to claim 1, wherein the controlling charging of a battery unit of the to-be-charged device based on the QC protocol parameter, comprises:
determining whether the detected output voltage provided by the power supply device increases from a first voltage to a second voltage; and
adjusting setting of a current parameter in the to-be-charged device accordingly in response to the detected output voltage provided by the power supply device increasing from the first voltage to the second voltage.

4. The charging control method according to claim 3, wherein the controlling charging of a battery unit of the to-be-charged device based on the QC protocol parameter, comprises:
determining whether the detected output voltage provided by the power supply device decreasing from the second voltage to the first voltage; and
adjusting the setting of the current parameter in the to-be-charged device accordingly in response to the detected output voltage provided by the power supply device decreasing from the second voltage to the first voltage.

5. The charging control method according to claim 3 or claim 4, wherein the current parameter comprises at least one of: an input current parameter for limiting a maximum output current of the power supply device, a charging current parameter for limiting a maximum current input to the battery unit, and a cut-off current parameter for determining whether the battery unit is fully charged.

6. The charging control method according to claim 1, wherein the determining whether a type of a power supply device is a preset type, comprises:
determining whether the type of the power supply device identified by the control module is the preset type based on the type feedbacked from the control module of the to-be-charged device.

7. The charging control method according to claim 6, wherein the determining whether a type of a power supply device is a preset type, comprises:
determining that the type of the power supply device identified by the control module is not the preset type in response to type information feedbacked from the control module being not received within a preset period of time,

8. The charging control method according to claim 1, further comprising:
initiating a fast charging thread corresponding to the preset type in response to the type of the power supply device being the preset type.

9. The charging control method according to claim 8, wherein the preset type comprises at least one of a fast charging adapter in a first type and a fast charging adapter in a second type.

10. A to-be-charged device, comprising: a charging interface, a battery unit, a first control module and a second control module,
wherein the first control module is connected to the charging interface, and in response to a connection port provided by a power supply device connected to the to-be-charged device being identified as a dedicated charging port, the first control module is configured to inform the second control module to identify whether the type of the power supply device is a preset type; to identify whether the type provided by the power supply device is a QC type; and to obtain a QC protocol parameter stored in the to-be-charged device in response to the type of the power supply device being identified as the QC type, and control charging of the battery unit of the to-be-charged device based on the QC protocol parameter;wherein a maximum output voltage of the power supply device in the preset type is less than a maximum output voltage of the power supply device in the QC type.

11. The to-be-charged device according to claim 10, wherein the first control module, when controlling the charging of the battery unit of the to-be-charged device, is configured to: determine whether a voltage of the battery unit is higher than a preset voltage threshold; request the power supply device to adjust an output voltage to a first voltage in response to the voltage of the battery unit being higher than the voltage threshold; and request the power supply device to adjust the output voltage to a second voltage in response to the voltage of the battery unit being lower than the voltage threshold;
wherein the first voltage is lower than the second voltage.

12. The to-be-charged device according to claim 10, wherein the first control module, when controlling the charging of the battery unit of the to-be-charged device, is configured to: determine whether a detected output voltage provided by the power supply device increases from a first voltage to a second voltage; and adjust setting of a current parameter in the to-be-charged device accordingly in response to the detected output voltage provided by the power supply device being determined as increasing from the first voltage to the second voltage.

13. The to-be-charged device according to claim 12, wherein the first control module, when controlling charging of the battery unit of the to-be-charged device, is configured to: determine whether the detected output voltage provided by the power supply device decreases from the second voltage to the first voltage; and adjust setting of the current parameter in the to-be-charged device accordingly in response to the detected output voltage provided by the power supply device being determined as decreasing from the second voltage to the first voltage.

14. The to-be-charged device according to claim 12 or claim 13, wherein the current parameter includes at least one of: an input current parameter for limiting the maximum output current of the power supply device, a charging current parameter for limiting a maximum current input to the battery unit, and a cut-off current parameter for determining whether the battery unit is fully charged.

15. The to-be-charged device according to claim 10, wherein the first control module is configured to determine, based on the type feedbacked from the second control module, whether the type of the power supply device identified by the second control module is the preset type.

16. The to-be-charged device according to claim 15, wherein the first control module, when not receiving any type information sent from the second control module within a preset period of time, is further configured to determine that the type of the power supply device identified by the second control module is not the preset type.

17. The to-be-charged device according to claim 10, wherein the first control module is an application processor, and the second control module is a micro control unit.

18. The to-be-charged device according to claim 10, wherein the first control module is further configured to initiate a fast charging thread corresponding to the preset type in response to the type of the power supply device being the preset type.

19. An electronic device, comprising: a memory, a processor and executable instructions stored in the memory and capable of being executed by the processor, wherein the processor performs the method according to any one of claims 1-9 when executing the executable instructions.

20. A computer-readable storage medium, having executable instructions stored in, wherein the executable instructions, when being executed by a processor, implement the method according to any one of claims 1-9.
